# EUROPÄISCHE PATENTSCHRIFT

(11) **EP 0 791 272 B1**
(45) Veröffentlichungstag und Bekanntmachung des Hinweises auf die Patenterteilung: **29.07.1998**
(21) Anmeldenummer: 95938403.3
(22) Anmeldetag: 03.11.1995
(51) Int. Cl.: H04N 7/16

(54) **FERNBEDIENUNG FÜR EIN EMPFANGSGERÄT**
REMOTE CONTROL FOR A RECEIVER DEVICE
TELECOMMANDE DESTINEE A UN APPAREIL RECEPTEUR

(30) Priorität: 09.11.1994 DE 9417937 U; 01.06.1995 DE 19520180
(43) Veröffentlichungstag der Anmeldung: 27.08.1997
(73) Patentinhaber: C.I.S. HOTEL COMMUNICATIONS GMBH, 21337 Lüneburg (DE)
(72) Erfinder: CLAASSEN, Henning, J., D-21337 Lüneburg (DE)
(74) Vertreter: Marx, Lothar, Dr.
(86) Internationale Anmeldenummer: EP9504326
(87) Internationale Veröffentlichungsnummer: WO9615629

(56) Entgegenhaltungen:
- EP-A- 0 317 404
- EP-A- 0 570 785
- DE-A- 4 212 200
- FR-A- 2 696 888

## Beschreibung

Die Erfindung betrifft eine Fernbedienung für ein Empfangsgerät, insbesondere ein Fernsehgerät.

Bei lokalen Netzen von Empfangsgeräten, wie sie insbesondere als sogenannte Pay-TV-Netze mit einzelnen Pay-TV-Kanälen neben den üblichen Sendekanälen der privaten und öffentlichen Sendeanstalten in Hotels und Kliniken betrieben werden, erfordert die Erfassung des Empfangs oder der Empfangszeiten der zahlungspflichtigen Kanäle, nämlich der Pay-TV-Kanäle, einen besonderen technischen Aufwand für den Pay-TV-Betreiber. Bei bekannten Pay-TV-Systemen werden die Empfangszeiten der einzelnen Fernsehgeräte jeweils über eine gesonderte Leitung von jedem Fernsehgerät zu einer zentralen Erfassungsstelle geleitet und von dort schließlich auf die am Ende des Hotel- oder Klinikaufenthalts zu erstellende Endrechnung für einen Gast bzw. einen Patienten gebucht. Wegen der hierfür erforderlichen Leitungen und Schaltungen ist diese zentrale Erfassung sehr aufwendig.

Es sind auch bereits Fernsehgeräte bekannt, für die Zulassungskarten käuflich erworben werden können. Diese Zulassungskarten werden in ein Kartenlesegerät, einem sogenannten Swipe, am Fernsehgerät eingeführt, das dadurch freigeschaltet werden kann. Nachteilig an dieser Lösung ist es, daß am Fernsehgerät selbst bauliche Veränderungen vorgenommen werden müssen.

In der DE 42 17 649 A1 wird offenbart, einen Kartenleser zur Freigabe eines Fernsehgeräts bzw. Fernsprechapparates zu verwenden, wobei der Kartenleser an einem Bett-Bediengerät angebracht ist. Das Bett-Bediengerät weist Eingabetasten auf, die zur Ein-/Ausschaltung und zur Kanalauswahl des Fernsehgerätes benutzt werden. Alternativ wird vorgeschlagen, diese Eingabetasten des Bett-Bediengerätes wegzulassen und dafür ein Fernsprechgerät oder eine Infrarot-Bedieneinrichtung vorzusehen. Als weitere Alternative sollen die Eingabetasten am Kartenleser vorgesehen werden.

In der DE 42 17 648 A1 ist ein Bett-Bediengerät mit einem Kartenleser offenbart, welches mit einer Steuereinrichtung in einer Fernsteuereinrichtung verbunden ist, wobei ein Kopfhörer mit der Fernsteuereinrichtung verbindbar ist und in Abhängigkeit von einer auf der in einen Kartenleser einführbaren Karte eingespeicherten Information die Freigabe der Benutzung eines Fernsehgerätes erfolgt.

Die DE 42 18 125 A1 zeigt, daß ein die Form eines Telefonapparates aufweisendes Bedienungsgerät zur Fernsteuerung für ein Bildschirmgerät verwendet werden kann, wobei im Telefonapparat eine Berechtigungskontrolle durchgeführt wird, ob der Benutzer des Telefons ein Fernsehgerät benutzen darf oder nicht. Es wird vorgeschlagen, diese Kontrolle über eine entsprechende Chip-Karte vorzunehmen.

In der EP-A-317404 wird ein Pay-TV-System beschrieben, wobei eine Kartenleseeinrichtung im Fernsehgerät vorgesehen ist.

Die FR-A-2696888 offenbart eine Fernsteuerung, wobei die Funktion der Fernsteuerung durch eine einsteckbare Speicherkarte bestimmt werden kann.

In der DE-A-4212200 ist ein Fernbedienungssystem offenbart, welches zum Bedienen von Haushaltsgeräten unter Verwendung einer IC-Karte und eines entfernten öffentlichen Fernsprechers, der die IC-Karte zu verarbeiten vermag, über ein öffentliches Telefonnetz dient.

Die oben genannten Vorrichtungen weisen jedoch den Nachteil auf, daß die Überwachung des Einschaltens des Fernsehgerätes relativ komplex ausgebildete Vorrichtungen erfordert und die Installation dieser Vorrichtungen relativ aufwendig ist.

Die Erfindung hatte es sich daher zur Aufgabe gemacht, die Überwachung des Einschaltens verschiedener Fernsehgeräte sowie die dazu erforderlichen Vorrichtungen, wie z.B. Fernbedienungen und, falls gewünscht, auch die Erfassung der Einschaltzeiten einzelner oder aller Programmkanäle eines Empfangsgerätes zu vereinfachen und dadurch auch zu verbilligen.

Diese Aufgabe wird durch den Gegenstand von Anspruch 1 sowie das Verfahren nach Anspruch 20 gelöst.

Nach der Erfindung wird eine Leseeinrichtung für einen Datenträger, welcher Informationen zur Inbetriebnahme der Fernbedienung und/oder mindestens eines Programmkanals des Empfangsgerätes enthält, beispielsweise eine Chip- oder Magnetstreifenkarte, eine Lochstreifenkarte, ein optischer oder sonstiger geeigneter Datenträger, in oder an einer Fernbedienung bzw. deren Gehäuse angeordnet. Der Fernbedienung is ein Code zugeordnet, wobei dieser Code mit einer Vorrichtung der Fernbedienung auf den Datenträger geschrieben, von dem Datenträger gelesen und mit dem Code der Fernbedienung verglichen wird.

Mittels dieser Datenträger-Leseeinrichtung wird die Fernbedienung selbst und/oder ein Programmkanal eines Empfangsgerätes in Betrieb genommen, wenn z.B. der Empfangsgerätetyp richtig spezifiziert ist und/oder der in die Leserichtung eingeführte Datenträger von ihr als gültig erkannt worden ist. Dazu können die Steuerdaten für verschiedene Empfangsgerätetypen auf der Karte gespeichert sein. Besonders bevorzugt wird eine Programmtaste oder eine Einschalttaste der Fernbedienung selbst freigeschaltet.

Durch die Anordnung der Datenträger-Leseeinrichtung bei der Fernbedienung entfallen die bislang üblichen zusätzlichen Leitungssysteme bei den bekannten Pay-TV-Netzen, wodurch das Netz selbst bzw. dessen Installation erheblich vereinfacht und verbilligt werden kann. Desweiteren kann eine so ausgestaltete Fernbedienung zum Ansteuern verschiedener Empfangsgerätetypen verwendet werden. Auch der Umbau von Empfangsgeräten, wie er im Falle von Karten-Leseeinrichtungen, die am Gerät selbst angebracht sind, unumgänglich ist, entfällt. So kann ein Pay-TV-Betreiber sein Netz ungestört solange betreiben, bis er über erfindungsgemäß ausgebildete Fernbedienungen verfügt, die er einfach gegen seine bisherigen Fernbedienungen austauschen muß. Insbesondere braucht er bei einer Umstellung von der zentralen Erfassung zu einer dezentralen Erfassung vor Ort seine teuren Fernsehgeräte nicht umzubauen oder gänzlich auszutauschen.

Die Datenträger-Leseeinrichtung ist vorzugsweise in die Fernbedienung integriert, was bei einer Reihe von handelsüblichen Fernbedienungen aufgrund des reichlich zur Verfügung stehenden Platzes keine Probleme bereitet. Andernfalls wäre für eine Fernbedienung ein etwas größeres Gehäuse vorzusehen.

Nach einer besonders bevorzugten Ausführungsform der Erfindung ist die Leseeinrichtung als kombinierte Lese-/Schreibeinrichtung ausgebildet. Hierdurch wird es möglich, nicht nur die Gültigkeit eines eingeführten Datenträgers durch den Lesevorgang zu verifizieren, sondern den Datenträger nach dem Anwählen eines freigeschalteten Programmkanals bzw. einer freigeschalteten Taste der Fernbedienung auch zu beschreiben, um das Freischalten auf dem Datenträger zu registrieren. Besonders bevorzugt ist solch eine Lese-/Schreibeinrichtung noch mit einer Zeitmeßeinrichtung verbunden, um auch die von solch einer Zeitmeßeinrichtung erfaßten Zeiteinheiten, die der Nutzungszeit des freigeschalteten Programmkanals entsprechen, auf dem Datenträger zu vermerken. Der Datenträger, auf der anderen Seite, hat als Information gespeichert, daß überhaupt ein oder mehrere Programmkanäle freizuschalten sind, oder es ist die Anzahl der noch möglichen Freischaltvorgänge oder die Dauer der noch zur Verfügung stehenden Nutzungszeit gespeichert. Ebenso entspricht es der Erfindung, wenn auf der Karte der Zeitpunkt des Freischaltens und das Ende der Nutzungszeit notiert werden. Wird nur gewünscht, verschiedene Empfangsgerätetypen mit der Fernsteuerung zu bedienen, so kann auf die Schreibeinrichtung verzichtet werden.

Besonders einfach und für den Hotelgast oder den Patienten in einer Klinik oder dessen Besucher bequem und angenehm ist es, wenn der Datenträger eine große Anzahl von Freischaltvorgängen oder eine lange Nutzungsdauer erlaubt. Der Datenträger kann vom Nutzer einmal käuflich erworben bis ans Ende seiner Nutzungsdauer verwendet und danach einfach entsorgt werden. Auch für den Betreiber der freizuschaltenden Empfangsgeräte, beispielsweise einen Pay-TV-Betreiber, bringt dies die höchste Rationalisierung. Die Nutzung seines Systems muß nämlich nicht für jeden Nutzer individuell abgerechnet werden. Es müssen lediglich gültige Datenträger zur Verfügung gestellt bzw. verkauft werden. Ggf. können die verbrauchten Datenträger zurückgenommen und nach entsprechender Aufarbeitung bzw. Umpro-grammierung neu in Umlauf gesetzt werden.

In einer bevorzugten Ausführungsform sind auf dem Datenträger die Informationen vorhanden, die benötigt werden, um eine Vielzahl verschiedener Empfangsgerätetypen mit der Fernbedienung ansteuern zu können. Die Auswahl des jeweils gewünschten Typs kann dabei entweder von der Fernbedienung selbst durch Datenaustausch mit dem jeweiligen Empfangsgerät erfolgen oder vom Benutzer über ein Tastenfeld der Fernbedienung vorgenommen werden. Es ist zur Durchführung der oben beschriebenen Funktion nicht unbebingt erforderlich, daß weitere Informationen außer den zur Ansteuerung verschiedener Gerätetypen benötigten auf der Karte vorhanden sind.

Bevorzugterweise wird die Erfindung in Pay-TV-Netzen von Hotels und Kliniken verwendet. Als "Pay-TV-Netz" wird für die Zwecke der Erfindung ein lokal begrenztes Netz mit einer eigenen Sendestation und daran angeschlossenen Fernsehgeräten, die oft verschiedenen Typs sind, verstanden. Die Sendestation erzeugt eigene Sendungen, insbesondere Videofilme, die im lokalen Netz an die angeschlossenen Fernsehgeräte verteilt und von den Nutzern abgefragt werden können. Daneben kann jedes Fernsehgerät von außerhalb des Netzes gesendete Programmkanäle empfangen. Für die Erfassung von Sendezeiten der oft ebenfalls einfach als "Pay-TV" bezeichneten Programmkanäle, die ein großes Sendegebiet abdecken, beispielsweise "Premiere", läßt sich die Erfindung jedoch ebenso mit Vorteil einsetzen.

Die mit der erfindungsgemäßen Fernbedienung mögliche Typenauswahl von Empfangsgeräten kann bei Pay-TV-Netzen mit verschiedenen Empfangsgerätetypen vorteilhaft eingesetzt werden.

Bei herkömmlichen Pay-TV-Netzen verfügen die Fernsehgeräte über eine Reihe von Programmkanälen, die von privaten oder öffentlich-rechtlichen Sendeanstalten empfangen und dem Nutzer kostenlos zur Verfügung gestellt werden, und auch über eine Reihe von zahlungspflichtigen Programmkanälen, die beispielsweise über hauseigene Videoanlagen an die einzelnen Fersehgeräte des Pay-TV-Netzes verteilt werden. In diesem Falle sind im allgemeinen nur diese zahlungspflichtigen Programmkanäle freizuschalten, während die übrigen Kanäle auch ohne gültigen Datenträger benutzt werden können.

Die Erfindung ist jedoch auch im privaten Bereich nutzbringend anzuwenden. So kann sie vorteilhafterweise als Kindersperre eingesetzt werden. In diesem Falle, aber auch bei Pay-TV-Netzen, können auch sämtliche Programmkanäle gesperrt und nur durch Einführen eines gültigen Datenträgers freizuschalten sein. Es genügt auch die Freischaltung lediglich einer zentralen Einschalttaste, falls solch eine Taste vorhanden ist.

Im Falle eines lokalen Netzes mit Empfangsgeräten, über die kostenpflichtige Programmkanäle empfangen werden können, wie dies bei einem Pay-TV der Fall ist, ist bevorzugterweise jeweils eine Fernbedienung einem bestimmten Empfangsgerät zugeordnet. Hierdurch wird Mißbrauch verhindert, der dadurch entsteht, daß ein Nutzer nach dem erstmaligen Freischalten seiner Fernbedienung weitere Programmkanäle anderer Empfangsgeräte, die ebenfalls freizuschalten sind, einschaltet, ohne für diese weiteren Nutzungen zahlen zu müssen. Es sind bereits Empfangsgeräte auf dem Markt, die von Hause aus über ein Empfangsteil verfügen, das auf den Sender einer bestimmten Fernbedienung voreingestellt ist oder darauf eingestellt werden kann.

Da jedoch noch nicht alle Hersteller solche voreingestellten bzw. einstellbaren Geräte anbieten und der bei weitem größte Teil der im Gebrauch befindlichen Geräte über diese wünschenswerte Zusatzeigenschaft noch nicht verfügt, wird eine bevorzugte Ausführungsform vorgeschlagen, nach der Modifikationen lediglich bei der Fernbedienung vorzunehmen sind und dem Empfangsgerät ein zusätzliches Sende-/Empfangsteil zugeordnet wird, das jedoch am Empfangsgerät selbst keine baulichen Veränderungen erfordert.

Diese Vorrichtung kann jedoch entfallen, wenn der Empfangsgerätetyp mit der Fernbedienung spezifiziert wird, da es dann möglich ist, das Freischalten von Programmkanälen anderer Empfangsgeräte durch den Datenaustausch zwischen Fernbedienung und Empfangsgerät zu erkennen. Dazu können auch baugleiche Empfangsgeräte z.B. durch Vergabe von Identifikationsnummern für die Fernbedienung unterscheidbar gemacht werden.

Nach einer ersten Ausführungsform der Erfindung ist der Datenträger "individualisiert", d. h. nur für ein vorgegebenes Empfangsgerät bzw. eine vorgegebene Fernbedienung verwendbar und in einer zweiten Ausführungsform ist die Fernbedienung selbst nur für ein vorgegebenes Empfangsgerät nutzbar.

Zur Identifizierung des Empfangsgerätes als "bedienbar" oder "nicht-bedienbar" wird an dem Empfangsgerät oder in der Nähe dazu ein Sende-/Empfangsteil angebracht. Beim Drücken der Einschalttaste oder der freizuschaltenden Programmtaste der Fernbedienung sendet die Fernbedienung zuerst ein Identifizierungssignal aus, das von diesem Sende-/Empfangsteil empfangen und identifiziert wird. Hat das Sende-/Empfangsteil das von der Fernbedienung empfangene Signal als passend erkannt, sendet es seinerseits ein "ok"-Signal an die Fernbedienung zurück. Dieses Signal wird von der Fernbedienung empfangen, die dazu ihrerseits erfindungsgemäß mit einem entsprechenden Empfänger ausgerüstet ist. Erst der Empfang solch eines Signals und das Erkennen eines gültigen Datenträgers durch die Leseeinrichtung schaltet die Fernbedienung frei.

In einer weiteren bevorzugten Ausführungsform der Erfindung können die Fernbedienungen selbst kodiert werden. Der für eine Fernbedienung spezifizierte Code wird dann bei der Programmierung nach dem Einführen der Chip-Karte in ein entsprechendes Schreib-/Programmiergerät auf die Chip-Karte geschrieben. Dieser auf der Chip-Karte gespeicherte Code kann von der Fernbedienung gelesen werden. Durch einen Vergleich des der Fernbedienung zugewiesenen Codes und des von der Chip-Karte eingelesenen Codes kann festgestellt werden, ob diese Chip-Karte schon zum Freischalten einer anderen Fernbedienung verwendet wurde. Somit kann verhindert werden, daß mit einer einzigen Chip-Karte mehrere Fernbedienungen freigeschaltet werden können. Dies ist z.B. bei Hotel-Pay-TV Anlagen wichtig, bei denen der Gast in der Regel über 24 Stunden gegen eine feste (Abbuchungs-)Gebühr das Fernsehgerät beliebig oft einschalten kann. In einer alternativen bevorzugten Ausführungsform muß der Code zuerst, z.B. beim Kauf der Chip-Karte, auf die Chip-Karte geschrieben werden, um eine bestimmte mit diesem Code kodierte Fernbedienung in Betrieb nehmen zu können.

Eine weitere bevorzugte Ausführungsform der Erfindung sieht vor, daß die Chip-Karte in der Fernbedienung verbleiben muß, um bestimmte Programmkanäle freischalten zu können. Dabei kann es sich entweder nur um Pay-TV-Kanäle oder um Pay-TV-Kanäle und reguläre, gebührenfreie Kanäle handeln.

Diese Ausführungsformen können zwar nicht verhindern, daß identische Fernsehgeräte, deren Empfangssignal nicht kodierbar ist, mit ein und derselben Fernbedienung eingeschaltet werden können, sorgen jedoch dafür, daß die Karte selbst nicht zur Freischaltung mehrerer Fernbedienungen (und damit Fernsehgeräte) genutzt werden kann.

Sollten sich zum Beispiel in einer Klinik zwei Fernsehgeräte in einem Krankenzimmer befinden, so könnte zu jedem Zeitpunkt immer nur ein Fernsehgerät freigeschaltet sein, da das Herausziehen der Chip-Karte aus der Fernbedienung die automatische Abschaltung dieser Fernbedienung und damit des eingeschalteten Fernsehgerätes bzw. seines gebührenpflichtigen Programms zur Folge hätte.

In einer weiteren Ausführungsform der Erfindung kann eine Chip-Karte zur Freischaltung verschiedener Fernbedienungen verwendet werden, wobei die verschiedenen Kodes der freigeschalteten Fernbedienungen auf der Chip-Karte gespeichert werden. Somit werden auf der Chip-Karte sämtliche Freischaltungen verschiedener Fernbedienungen gespeichert und können somit nach der Benutzung entsprechend abgerechnet bzw. abgebucht werden.

Bevorzugte Ausführungsbeispiele der Erfindung werden anhand der nachfolgenden Figuren beschrieben. Dabei werden weitere Merkmale und Vorteile der Erfindung offenbart. Es zeigen:
- Figur 1: eine erfindungsgemäße Fernbedienung,
- Figur 2: eine erste Ausführungsvariante der Fernbedienung nach Figur 1,
- Figur 3: eine zweite Ausführungsvariante der Fernbedienung nach Figur 1,
- Figur 4: eine erfindungsgemäße Fernbedienung mit einem zusätzlichen Empfänger.

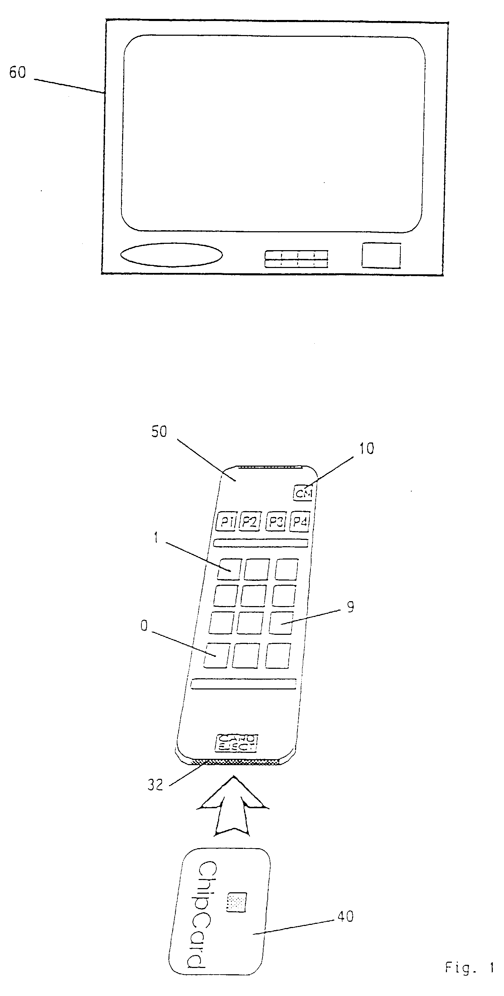

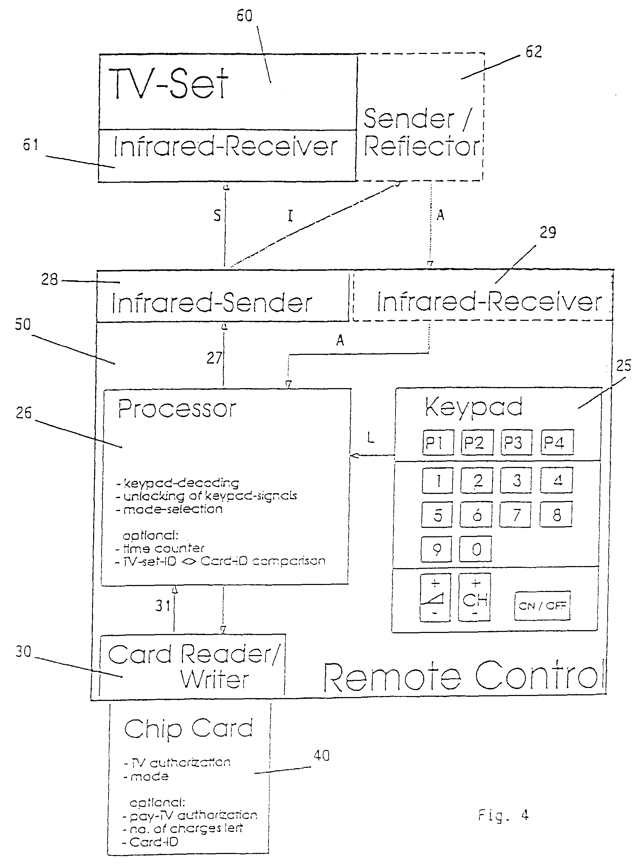

Figur 1 zeigt eine Fernbedienung 50 mit einem Schacht 32 zur Einführung eines Datenträgers 40, im Ausführungsbeispiel eine Chipkarte, in den Bereich einer in die Fernbedienung 50 integrierten Lese-/Schreibeinrichtung 30 (Figur 4). Mit der Fernbedienung 50 wird ein Empfangsgerät 60 bedient, das an ein lokales Netz, nämlich ein Pay-TV-Netz, angeschlossen ist. Die Fernbedienung 50 verfügt neben einer Einschalttaste 10 und Programmtasten 1 - 9 und 0 sowie nicht bezeichnete Bedientasten über vier Programmtasten P1 - P4 zum Auswählen eines von vier zahlungspflichtigen Programmkanälen. Die Programmtasten können ohne weiteres auch durch eine einzige Tastenwippe ersetzt gedacht werden.

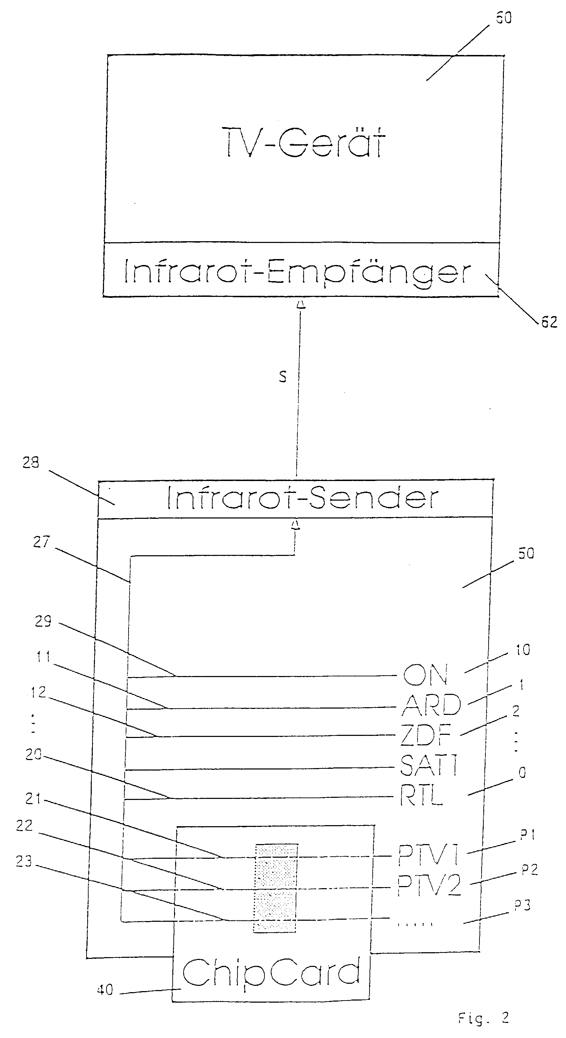

Figur 2 zeigt eine erste Ausführungsvariante der erfindungsgemäßen Fernbedienung, bei der lediglich die kostenpflichtigen Programmkanäle PTV1 - PTV4 des Fernsehgeräts 60 für den Empfang durch den Nutzer erst freizuschalten sind. Die Freischaltung erfolgt im Ausführungsbeispiel einzig durch die Freischaltung der entsprechenden Programmtasten P1 - P4 auf der Seite der Fernbedienung, während am Fernsehgerät 60 für das Blockieren bzw. das Freischalten der Programmkanäle PTV1 - PTV4 keine baulichen Veränderungen vorgenommen werden mußten.

Von den Programmtasten 1 - 9 und 0, der Einschalttaste 10 und den Pay-TV-Programmtasten P1 - P4 führt jeweils ein Signalweg zu einem Sender 28 der Fernbedienung 50. Die entsprechenden Signalleitungen 11 - 24, 29 der genannten Tasten führen schließlich über die Signalleitung 27 zum Sender 28, im Ausführungsbeispiel ein Infrarotsender. Der Sender 28 sendet dann in Abhängigkeit davon, welche Taste gedrückt worden ist, ein charakteristisches Sendesignal S aus, das von einem entsprechenden Empfänger 62 des Fernsehgerätes 60 empfangen wird. Soweit die Programmtasten 1 - 9, 0 und die Einschalttaste 10 betroffen sind, entspricht die in Figur 2 dargestellte Fernbedienung 50 einer herkömmlichen Fernbedieung. Die Bedienperson kann ohne weiteres jeden der am Fernsehgerät 60 eingestellten und durch Drücken einer der Programmtasten auswählbaren Programmkanäle auswählen. Der Sender 28 der Fernbedienung 50 empfängt jedoch kein Eingangssignal über die Signalleitung 27, wenn eine der Pay-TV-Programmtasten P1 - P4 gedrückt und keine Chipkarte 40 durch den in Figur 1 angedeuteten Einführschacht 32 eingeführt worden ist.

Nach einer sehr einfachen Ausführungsform der Erfindung wird dies dadurch erreicht, daß die Signalleitungen 21 - 24 von den Programmtasten P1 - P4, die schließlich über die Signalleitung 27 zum Sender 28 der Fernbedienung 50 führen, unterbrochen sind und erst durch eine im Ausführungsbeispiel nach Figur 2 nicht dargestellte Leseeinrichtung geschlossen werden, nämlich dann, wenn eine von dieser Leseeinrichtung als gültig erkannte Chipkarte 40 ordnungsgemäß eingeführt worden ist.

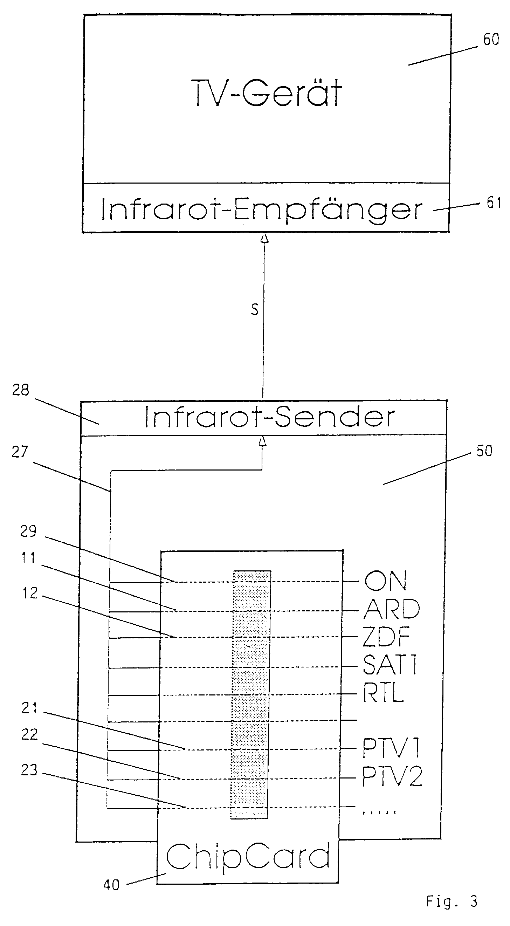

Figur 3 zeigt eine weitere Ausführungsvariante einer erfindungsgemäßen Fernbedienung 50. In dieser Variante sind alle Programmtasten 1 - 9, 0 und die Einschalttaste 10 mittels der Chipkarte 40 freizuschalten. Die weiteren Einzelheiten der Ausführungsvariante nach Figur 3 entsprechen denen nach Figur 2.

In dem in Figur 4 dargestellten Ausführungsbeispiel weist die Fernbedienung 50 neben dem Sender 28 gleichzeitig einen Empfänger 29 auf. Am Fernsehgerät 60 ist ein zusätzliches Sende-/Empfangsteil 62 angebracht, das vom Sender 28 der Fernbedienung ein Identifikationssignal I empfängt und seinerseits ein Authorisationssignal A sendet, wenn vom Sende/Empfangsteil 62 das Identifikationssignal I als ein zulässiges Signal erkannt worden ist; andernfalls bleibt das Sende-/Empfangsteil 62 stumm. Das Sende-/Empfangsteil 62 kann, muß jedoch nicht mit dem Fernsehgerät 60 physisch verbunden sein. Eine elektrische oder eine sonstige Signalverbindung besteht zwischen dem Sende-/Empfangsteil 62 und dem Fernsehgerät 60 nicht.

Diese Modifikation ist selbstverständlich nur bei solchen Empfangsgeräten vorzunehmen, die nicht bereits herstellerseitig auf die Signale einer bestimmten Fernbedienung eingestellt sind oder mit einer Einstellungsmöglichkeit, beispielsweise für einen Pay-TV-Betreiber, versehen sind.

Die in Figur 4 dargestellte Fernbedienung 50 weist ein der Fernbedienung 50 von Figur 1 vergleichbares Tastenfeld 25 auf. Die Signalleitungen 11 - 24, 29, die in den Figuren 2 und 3 einzeln eingezeichnet sind, sind in Figur 4 durch den Leitungsbus L angedeutet. Der Leitungsbus L liegt an einem Eingang einer geeigneten Schaltung bzw. eines Prozessors 26, der über einen weiteren Datenbus 31 mit der Lese-/Schreibeinrichtung 30 kommuniziert. Der Prozessor 26 erhält über den Leitungsbus L die Information, welche der Tasten des Tastenfeldes 25 gedrückt worden ist. Wenn es sich bei der gedrückten Taste um eine freizuschaltende Taste handelt - dies können die Pay-TV-Tasten P1 - P4 oder alle Programmtasten sein - gibt der Prozessor 26 nur dann über die Signalleitung 27 ein Ansteuerungssignal an den Sender 28 aus, wenn er von der Lese-/Schreibeinrichtung 30 über den Bus 31 die Information erhält, daß eine gültige Chipkarte 40 eingeführt ist.

Bei der erfindungsgemäßen Identifikation und Authorisation wird vom Sender 28 als erstes Signal ein für die Fernbedienung individuelles Identifikationssignal I ausgesendet, das für den Sende-/Empfangsteil 62 bestimmt ist. Das Sende-/Empfangsteil 62 stellt fest, ob das ausgesendete Identifikationssignal I paßt oder nicht. Handelt es sich um ein zulässiges Signal I, so sendet das Sende-/Empfangsteil 62 seinerseits ein Authorisationssignal A, das von dem Empfänger 29 der Fernbedienung 50 empfangen wird. Der Empfänger 29 gibt das Authorisationssignal A seinerseits an den Prozessor 26 weiter. Nur wenn der Prozessor 26 solch ein Authorisationssignal A vom Empfänger 29 zu Beginn erhalten hat und dann die weiteren, vorstehend genannten Bedingungen erfüllt sind, gibt der Prozessor ein Einschalt- oder Programmwahlsignal S an den Sender 28 der Fernbedienung 50 weiter, der seinerseits das Signal S zum Empfangsteil 61 des Fernsehgeräts 60 sendet. Bei diesem Empfänger 61 handelt es sich um einen der üblichen Empfänger für Fernbedienungssignale.

In einer weiteren Ausführungsform der Erfindung, die auch ohne die oben beschriebenen Vorrichtungen und Verfahren ausgeführt werden kann, weist die Fernbedienung 50 eine Leseeinrichtung 30, vorzugsweise auch eine Lese-/Schreibeinrichtung 30 auf, in die die Chipkarte 40 eingeführt werden kann. Auf dieser Chipkarte 40 sind Informationen über verschiedene Empfangsgerätetypen gespeichert, so daß nach Eingabe eines Codes zur Spezifikation des Empfangsgerätetyps über das Tastenfeld 25 von dem Prozessor 26 der Fernbedienung 50 Steuersignale für den Sender 28 der Fernbedienung 50 erzeugt werden können, so daß der vorliegende Empfangsgerätetyp angesteuert werden kann. Ebenso können alle vom Fernsehgerät 60 ausgesandten Signale vom Empfänger 29 der Fernbedienung 50 empfangen und vom Prozessor 26 richtig verarbeitet werden, da dem Prozessor 26 der Typ des Empfangsgerätes bekannt ist. Somit können mit der oben beschriebenen Fernbedienung in Verbindung mit der Chipkarte 40 verschiedene Empfangsgerätetypen angesteuert werden.

In einer bevorzugten Ausführungsform der Erfindung muß der Code zur Spezifikation des Empfangsgerätetyps nicht über das Tastenfeld 25 eingegeben werden. Dazu sendet die Fernbedienung 50 bei Vorliegen eines Tastendrucks auf dem Tastenfeld 25 zunächst ein oder mehrere Identifikationssignale I an das Fernsehgerät 60. Dieses erkennt das Vorliegen eines Steuerwunsches der Fernbedienung 50 und sendet ein Antwortsignal A nach Empfangen des Identifikationssignales I an die Fernbedienung 50 zurück, welches von dem Empfänger 29 empfangen wird. Im Antwortsignal A des Fernsehgerätes 60 sind Informationen über den Empfangsgerätetyp enthalten. Diese Informationen können nach Empfang des Antwortsignals A von dem Prozessor 26 der Fernbedienung 50 dekodiert werden, so daß der Prozessor 26 die Bedienungswünsche über das Tastenfeld 25 dem jeweiligen Empfangsgerätetyp anpassen und über die Signalleitung 27 dem Sender 28 der Fernbedienung 50 entsprechende Steuersignale übermitteln kann, die dann vom Empfangsteil 61 des Fernsehgerätes 60 empfangen und im folgenden bedeutungsrichtig dekodiert werden können.

Somit kann die Fernbedienung 50 in Abhängigkeit von der Auswahl des Empfangsgerätetyps typspezifisch in Betrieb genommen werden.

## Patentansprüche

1. Drahtlose Fernbedienung für ein Fernsehgerät eines Pay-TV-Systems mit
a) einer Leseeinrichtung (30) für einen Datenträger (40), der Informationen zur Inbetriebnahme der Fernbedienung (50) und/oder mindestens eines Programmkanals des Empfangsgerätes (60) enthält;
**dadurch gekennzeichnet, daß**
b) der Fernbedienung (50) ein Code (C) zugeordnet ist; und
c) die Fernbedienung aufweist
c1) eine Vorrichtung zum Schreiben des Codes (C) der Fernbedienung (50) auf den Datenträger (40),
c2) eine Vorrichtung zum Lesen des Codes (C) von dem Datenträger (40) an der Fernbedienung (50), und
c3) eine Vorrichtung zum Vergleichen des gelesenen Codes (C) mit dem Code (C) der Fernbedienung (50) und zum Steuern des Freischaltens der Fernbedienung (50).

2. Fernbedienung nach Anspruch 1, dadurch gekennzeichnet, daß die Leseeinrichtung (30) in die Fernbedienung (50) integriert ist.

3. Fernbedienung nach Anspruch 1 oder 2, dadurch gekennzeichnet, daß die Datenträger-Leseeinrichtung (30) zur Freischaltung einer Programmtaste (P1 - P4, 1 - 9) oder einer Einschalttaste (0) der Fernbedienung (50) vorgesehen ist.

4. Fernbedienung nach Anspruch 3, dadurch gekennzeichnet, daß ein Signalweg von der Taste (P1 - P4, 1 - 9, 0) zu einem Sender (28) der Fernbedienung (50) beim Freischalten geschlossen wird.

5. Fernbedienung nach Anspruch 3, dadurch gekennzeichnet, daß eine Schaltung (26), insbesondere eine mikroprogrammierbare Schaltung oder ein Minicomputer, zur Steuerung von Freischaltvorgängen vorgesehen ist, die von der Leseeinrichtung (30) über eine Leitung (31) ein Signal erhält, daß ein gültiger Datenträger in die Leseeinrichtung (30) eingeführt worden ist oder nicht.

6. Fernbedienung nach einem der vorhergehenden Ansprüche, dadurch gekennzeichnet, daß die Leseeinrichtung (30) als kombinierte Lese-/Schreibeinrichtung (30) ausgebildet ist.

7. Fernbedienung nach Anspruch 6, dadurch gekennzeichnet, daß die Lese-/Schreibeinrichtung (30) auf dem Datenträger (40) einen Freischaltvorgang notiert.

8. Fernbedienung nach Anspruch 6 oder 7, dadurch gekennzeichnet, daß es sich bei dem Datenträger (40) um eine Chipkarte handelt, auf der die Nutzungszeit eines freigeschalteten Programmkanals vermerkt oder abgebucht werden kann.

9. Fernbedienung nach einem der Ansprüche 3 bis 8, dadurch gekennzeichnet, daß jede Programmtaste (P1 - P4, 1 - 9, 0) und die Einschalttaste (10) freizuschalten sind.

10. Fernbedienung nach einem der Ansprüche 3 bis 8, dadurch gekennzeichnet, daß nur ausgewählte Programmtasten (P1 - P4) freizuschalten sind.

11. Fernbedienung nach einem der vorhergehenden Ansprüche, gekennzeichnet durch einen Empfänger (29) für den Empfang eines Authorisationssignals (A), das von einem Sende-/Empfangsteil (62), das dem zu bedienenden Empfangsgerät (60) zugeordnet ist, ausgesendet wird, falls dieses Sende-/Empfangsteil (62) zuvor ein zulässiges Identifikationssignal (I) von einem Sender (28) der Fernbedienung (50) emfpangen hat.

12. Fernbedienung nach Anspruch 11, dadurch gekennzeichnet, daß das Authorisationssignal (A) der Schaltung (26) zugeführt wird und ein Freischaltvorgang nur erfolgt, wenn der Empfänger (29) der Fernbedienung (50) ein Authorisationssignal (A) erhalten hat.

13. Fernbedienung nach einem der Ansprüche 1 bis 12, dadurch gekennzeichnet, daß auf dem Datenträger (40) Informationen über bestimmte Empfangsgerätetypen gespeichert sind.

14. Fernbedienung nach Anspruch 13, dadurch gekennzeichnet, daß nach der Spezifikation des Empfangsgerätetyps mittels eines Tastenfeldes (25) der Fernbedienung das Sendeprotokoll der Fernbedienung entsprechend den zu dem Empfangsgerätetyp auf dem Datenträger (40) gespeicherten Informationen angepaßt wird.

15. Fernbedienung nach Anspruch 13 oder 14, dadurch gekennzeichnet, daß die Fernbedienung ein oder mehrere Identifikationssignale (7) an das Empfangsgerät (60) sendet und von diesem ein Antwortsignal erhält, aus welchem der Empfangsgerätetyp bestimmt werden kann.

16. Fernbedienung nach einem der vorhergehenden Ansprüche, dadurch gekennzeichnet, daß der Datenträger (40) in der Fernbedienung (50) verbleiben muß, um bestimmte Programmkanäle sehen zu können.

17. Lokales Netz mit
a) fernbedienbaren Empfangsgeräten (60),
b) die von einer Sendestation des lokalen Netzes gebührenpflichtige und gebührenfreie Programmkanäle empfangen,
**dadurch gekennzeichnet, daß**
c) zum Freischalten eines Programmkanals eine drahtlose Fernbedienung (50) nach einem der Ansprüche 1 bis 16 verwendet wird.

18. Lokales Netz nach Anspruch 17, dadurch gekennzeichnet, daß eine Lese-/Schreibeinrichtung (30) der Fernbedienung (50) zum Abbuchen des Wertes der Nutzungszeit von einem Datenträger (40) verwendet wird.

19. Lokales Netz nach Anspruch 17 oder 18, dadurch gekennzeichnet, daß ein Datenaustausch zwischen einem Empfangsgerät (60) und einer Fernbedienung (50) zur Identifikation der Fernbedienung (50) und/oder zur Authorisation verwendet wird.

20. Verfahren zum Freischalten einer Fernbedienung für ein Fernsehgerät eines Pay-TV-Systems, wobei
a) ein der Fernbedienung (50) zugewiesener Code (C) von einer in die Fernbedienung (50) integrierten Schreibeinrichtung (30) auf einen Datenträger (40) geschrieben wird;
b) der auf dem Datenträger (40) gespeicherte Code (C) von der Fernbedienung (50) gelesen wird;
c) der der Fernbedienung (50) zugewiesene Code (C) mit dem von dem Datenträger (40) eingelesenen Code (C) verglichen wird; und
d) aus dem Vergleich festgestellt wird, ob dieser Datenträger (40) schon zum Freischalten einer anderen Fernbedienung (50) verwendet wurde.

21. Verfahren nach Anspruch 20, dadurch gekennzeichnet, daß ein Signalweg von einer Programmtaste (P1 - P4, 1 - 9, 0) zu einem Sender (28) der Fernbedienung (50) beim Freischalten geschlossen wird.

22. Verfahren nach einem der Ansprüche 20 oder 21, dadurch gekennzeichnet, daß eine Lese-/Schreibeeinrichtung (30) auf dem Datenträger (40) einen Freischaltvorgang notiert.

23. Verfahren nach einem der Ansprüche 20 bis 22, dadurch gekennzeichnet, daß auf dem Datenträger (40) die Nutzungszeit eines freigeschalteten Programmkanals vermerkt oder abgebucht wird.

24. Verfahren nach Anspruch 20, wobei zur Auswahl von Kanälen in einem lokalen Netz mit gebührenpflichtigen und gebührenfreien Kanälen, Empfangsgeräten (60) und Fernbedienungen (50) Daten zwischen den Empfangsgeräten (60) und den Fernbedienungen (50) ausgetauscht werden.

25. Verfahren nach Anspruch 24, dadurch gekennzeichnet, daß zuerst ein Identifikationssignal (7) von einem Sender (28) der Fernbedienung (50) ausgesendet wird.

26. Verfahren nach Anspruch 24 oder 25, dadurch gekennzeichnet, daß das Empfangsgerät (60) nach Empfang eines Identifikationssignales (7) ein Authorisationssignal (A) sendet, wenn das Identifikationssignal (7) zulässig ist.

27. Verfahren nach einem der Ansprüche 24 bis 26, dadurch gekennzeichnet, daß erst nach dem Empfang eines Authorisationssignals (A) durch einen Empfänger (29) der Fernbedienung (50) das Empfangsgerät (60) mit der Fernbedienung (50) bedient werden kann.

28. Verfahren nach einem der Ansprüche 24 bis 27, dadurch gekennzeichnet, daß nach dem Empfang des Authorisationssignals (A) und/oder nach bestimmten Zeiteinheiten ein bestimmter Betrag von einem Datenträger (40) der Fernbedienung (50) abgebucht wird.

## Claims

1. A cordless remote control for a television set/receiver of a pay TV system, comprising
a) a reader (30) for a data medium (40), said data medium (40) containing information for activating said remote control (50) and/or at least one program channel of said television set/receiver (60),
**characterized in that**
b) said remote control (50) is assigned a code (C); and
c) said remote control (50) comprises
c1) a device for writing said code (C) of said remote control (50) on said data medium (40),
c2) a device for reading said code (C) from said data medium (40) on said remote control (50), and
c3) a device for comparing said read code (C) to said code (C) of said remote control (50) and for controlling unblocking of said remote control (50).

2. The remote control as set forth in claim 1, characterized in that said reading device (30) is integrated in said remote control (50).

3. The remote control as set forth in claim 1 or 2, characterized in that said data medium reading device (30) is provided for unblocking a program key (P1-P4, 1-9) or a power key (0) of said remote control (50).

4. The remote control as set forth in claim 3, characterized in that a signal path from said key (P1-P4, 1-9, 0) to a transmitter (28) of said remote control (50) is closed on unblocking.

5. The remote control as set forth in claim 3, characterized in that a circuit (26), more particularly a microprogrammable circuit or a minicomputer, is provided for controlling said unblocking actions, said circuit (26) receiving via a lead (31) a signal from said reading device (30) whether a valid data medium (40) has been inserted into said reading device (30) or not.

6. The remote control as set forth in any of the preceding claims, characterized in that said reading device (30) is configured as a combined reading/writing device (30).

7. The remote control as set forth in claim 6, characterized in that said reading/writing device (30) records an unblocking action on said data medium (40).

8. The remote control as set forth in claims 6 or 7, characterized in that said data medium (40) is a chip card on which the viewing time of an unblocked program channel can be recorded or booked.

9. The remote control as set forth in any of the claims 3 to 8, characterized in that each program key (P1-P4, 1-9, 0) and said power key (10) need to be unblocked.

10. The remote control as set forth in any of the claims 3 to 8, characterized in that only selected program keys (P1-P4) need to be unblocked.

11. The remote control as set forth in any of the preceding claims, characterized by a receiving device (29) for receiving an authorization signal (A) transmitted by a transmitter/receiver portion (62) assigned to said TV set/receiver (60) to be operated when said transmitter/receiver portion (62) has previously received an allowable ID signal (I) from a transmitter (28) of said remote control (50).

12. The remote control as set forth in claim 11, characterized in that said authorization signal (A) is applied to said circuit (26) and an unblocking action will only occur when said receiving device (29) of said remote control (50) has received an authorization signal (A).

13. The remote control as set forth in any of the preceding claims 1 to 12, characterized in that information is stored on said data medium (40) as to specific types of TVs/receivers.

14. The remote control as set forth in claim 13, characterized in that the sending protocol of said remote control is adapted to said information stored on said data medium (40) corresponding to the type of TV set/receiver by means of a keyboard (25) in accordance with the specification of the type of TV set/receiver.

15. The remote control as set forth in claim 13 or 14, characterized in that said remote control sends one or more ID signals (7) to said receiver/TV set (60) and receives from the latter an answer signal from which the type of TV set/receiver can be determined.

16. The remote control as set forth in any of the preceding claims, characterized in that said data medium (40) needs to remain in said remote control (50) to permit viewing certain program channels.

17. A local network comprising
a) remote controllable receivers/TV sets (60)
b) receiving pay and non-pay program channels from a transmitting station of said local network,
**characterized in that**
c) a cordless remote control (50) as set forth in any of said claims 1 to 16 is used for unblocking a program channel.

18. The local network as set forth in claim 17, characterized in that a reading/writing device (30) of said remote control (50) is used for booking or subtracting the value of the viewing time from a data medium (40).

19. The local network as set forth in claim 17 or 18, characterized in that a data exchange is used between a receiver/TV set (60) and a remote control (50) for identifying said remote control (50) and/or for authorization.

20. A method of unblocking a remote control for a television set of a pay TV system, with
a) a code (C) assigned to said remote control (50) being written onto a data medium (40) by a writing device (30) integrated in said remote control (50);
b) said code (C) stored on said data medium (40) being read by said remote control (50);
c) said code (C) assigned to said remote control (50) being compared to said code (C) read from said data medium (40); and
d) it being established from said comparison whether said data medium (40) has already been used for unblocking another remote control.

21. The method as set forth in claim 20, characterized in that a signal path from a program key (P1-P4, 1-9, 0) to a transmitter (28) of said remote control (50) is closed upon unblocking.

22. The method as set forth in claim 20 or claim 21, characterized in that a reading/writing device (30) records on said data medium (40) an unblocking action.

23. The method as set forth in any of the claims 20 to 22, characterized in that the viewing time for an unblocked program channel is recorded or booked on said data medium (40).

24. The method as set forth in claim 20, wherein for the selection of channels in a local network with pay and non-pay channels, receivers/TV sets (60) and remote controls (50) data are exchanged between the receivers/TV sets (60) and the remote controls (50).

25. The method as set forth in claim 24, characterized in that an ID signal (7) is first transmitted from a transmitter (28) of the remote control (50).

26. The method as set forth in claim 24 or 25, characterized in that the receiver/TV set (60) transmits after receipt of an ID signal (7) an authorization signal (A) if the ID signal (7) is authentic.

27. The method as set forth in claim 24 to 26, characterized in that only after receipt of an authorization signal (A) by a receiving device (29) of the remote control (50) can the receiver/TV set (60) be operated with the remote control (50).

28. The method as set forth in claim 24 to 27, characterized in that after the receipt of the authorization signal (A) and/or after certain time units a certain amount is booked from a data carrier (40) of the remote control (50).

## Revendications

1. Télécommande sans fil pour un téléviseur d'un système TV à paiement, comportant
a) un dispositif de lecture (30) pour un support de données (40), qui contient des informations pour la mise en service de la télécommande (50) et/ou au moins d'un canal de programme de l'appareil de réception (60);
caractérisée en ce que
b) à la télécommande (50) est associé un code (C); et
c) la télécommande comporte
c1) un dispositif pour l'enregistrement du code (C) de la télécommande (50) sur le support de données (40),
c2) un dispositif pour la lecture du code (C) du support de données (40) à la télécommande (50), et
c3) un dispositif pour la comparaison du code (C) lu avec le code (C) de la télécommande (50) et pour la commande de l'autorisation de la télécommande (50).

2. Télécommande selon la revendication 1, caractérisée en ce que le dispositif de lecture (30) est intégré à la télécommande (50).

3. Télécommande selon la revendication 1 ou 2, caractérisée en ce que le dispositif de lecture (30) du support de données est prévu pour l'autorisation de commande d'une touche de programme (P1 à P4, 1 à 9) ou une touche d'enclenchement (0) de la télécommande (50).

4. Télécommande selon la revendication 3, caractérisée en ce qu'une voie de signaux de la touche (P1 à P4, 1 à 9, 0) vers un émetteur (28) de la télécommande (50) est fermée lorsque la commande est autorisée.

5. Télécommande selon la revendication 3, caractérisée en ce qu'un circuit (26), en particulier un circuit micro-programmable ou un mini-ordinateur, est prévu pour la commande d'opérations d'autorisation, qui reçoit du dispositif de lecture (30) par une ligne (31), un signal selon lequel un support de données valable a été ou non introduit dans le dispositif de lecture (30).

6. Télécommande selon l'une des revendications précédentes, caractérisée en ce que le dispositif de lecture (30) est un dispositif de lecture/enregistrement (30) combiné.

7. Télécommande selon la revendication 6, caractérisée en ce que le dispositif de lecture/enregistrement (30) inscrit une opération d'autorisation sur le support de données (40).

8. Télécommande selon la revendication 6 ou 7, caractérisée en ce que le support de données (40) est une carte à puce sur laquelle peut être inscrit ou décompté le temps d'utilisation d'un canal de programme autorisé à la commande.

9. Télécommande selon l'une des revendications 3 à 8, caractérisée en ce que chaque touche de programme (P1 à P4, 1 à 9, 0) et la touche d'enclenchement (10) doivent être autorisées à la commande.

10. Télécommande selon l'une des revendications 3 à 8, caractérisée en ce que seules les touches de programmes (P1 à P4) sélectionnées doivent être autorisées à la commande.

11. Télécommande selon l'une des revendications précédentes, caractérisée par un récepteur (29) pour la réception d'un signal d'autorisation (A), qui est émis par une partie émission/réception (62), qui est associée à l'appareil de réception (60) à commander, dans le cas où cette partie d'émission/réception (62) a reçu au préalable un signal d'identification (I) autorisé d'un émetteur (28) de la télécommande (50).

12. Télécommande selon la revendication 11, caractérisée en ce que le signal d'autorisation (A) est envoyé au circuit (26) et il se produit une opération d'autorisation de commande lorsque le récepteur (29) de la télécommande (50) a reçu un signal d'autorisation (A).

13. Télécommande selon l'une des revendications 1 à 12, caractérisée en ce que sur le support de données (40) sont mémorisées des information relatives à des types déterminés d'appareils de réception.

14. Télécommande selon la revendication 13, caractérisée en ce que suivant la spécification du type d'appareil de réception, le protocole d'émission de la télécommande est adapté au moyen d'un clavier (25) de la télécommande en fonction des informations concernant le type d'appareil de réception, mémorisées sur le support de données (40).

15. Télécommande selon la revendication 13 ou 14, caractérisée en ce que la télécommande émet un ou plusieurs signaux d'identification (7) à l'appareil de réception (60) et reçoit de celui-ci un signal de réponse, à partir duquel peut être déterminé le type d'appareil de réception.

16. Télécommande selon l'une des revendications précédentes, caractérisée en ce que le support de données (40) doit rester dans la télécommande (50), pour permettre de voir des canaux de programmes déterminés.

17. Réseau local avec
a) des appareils de réception (60) télécommandables,
b) qui reçoivent d'une station d'émission du réseau local, des canaux de programmes payants et gratuits,
caractérisé en ce que
c) pour l'autorisation de commande d'un canal de programme on utilise une télécommande (50) sans fil selon l'une des revendications 1 à 16.

18. Réseau local selon la revendication 17, caractérisé en ce qu'on utilise un dispositif de lecture/enregistrement (30) de la télécommande pour décompter la valeur du temps d'utilisation d'un support de données (40).

19. Réseau local selon la revendication 17 ou 18, caractérisé en ce qu'un échange de données entre un appareil de réception (60) et une télécommande (50) est utilisé pour l'identification de la télécommande (50) et/ou pour l'autorisation.

20. Procédé pour l'autorisation de commande d'une télécommande d'un téléviseur d'un système TV à paiement, dans lequel
a) un code (C) affecté à la télécommande (50) est enregistré sur un support de données (40), par un dispositif d'enregistrement (30) intégré à la télécommande (50);
b) le code (C) mémorisé sur le support de données (40) est lu par la télécommande (50);
c) le code (C) affecté à la télécommande (50) est comparé au code (C) lu par le support de données (40); et
d) à partir de la comparaison il est constaté si ce support de données a déjà été utilisé pour l'autorisation de commande d'une autre télécommande (50).

21. Procédé selon la revendication 20, caractérisé en ce qu'une voie de signaux d'une touche de programme (P1 à P4, 1 à 9, 0) vers un émetteur (28) de la télécommande (50) est fermée pendant l'autorisation de commande.

22. Procédé selon l'une des revendications 20 ou 21, caractérisé en ce qu'un dispositif de lecture/enregistrement (30) inscrit une opération d'autorisation de commande sur le support de données (40).

23. Procédé selon l'une des revendications 20 à 22, caractérisé en ce que le temps d'utilisation d'un canal de programme autorisé à la commande est inscrit ou décompté sur le support de données (40).

24. Procédé selon la revendication 20, dans lequel, pour la sélection de canaux dans un réseau local avec canaux payants et canaux gratuits, des appareils de réception (60) et des télécommandes (50), des données sont échangées entre les appareils de réception (60) et les télécommande (50).

25. Procédé selon la revendication 24, caractérisé en ce qu'un signal d'identification (7) est d'abord émis par un émetteur (28) de la télécommande (50).

26. Procédé selon la revendication 24 ou 25, caractérisé en ce que l'appareil de réception (60) émet un signal d'autorisation (A), après réception d'un signal d'identification (7), lorsque le signal d'identification (7) est autorisé.

27. Procédé selon l'une des revendications 24 à 26, caractérisé en ce que l'appareil de réception (60) ne peut être commandé au moyen de la télécommande (50) qu'après réception d'un signal d'autorisation (A) par un récepteur (29) de la télécommande (50).

28. Procédé selon l'une des revendications 24 à 27, caractérisé en ce qu'un montant déterminé est décompté par un support de données (40) de la télécommande (50), après réception du signal d'autorisation (A) et/ou après des unités de temps déterminées.
